**Europäisches Patentamt**

**European Patent Office**

**Office européen des brevets**

(19)

(11) Numéro de publication:

**0 086 688**
**A1**

## (12) DEMANDE DE BREVET EUROPEEN

(21) Numéro de dépôt: **83400181.0**

(51) Int. Cl.³: **H 04 M 11/00**

(22) Date de dépôt: **27.01.83**

(30) Priorité: **02.02.82 FR 8201622**

(71) Demandeur: **Prioux, Alain, 142, Bld Maurice Berteaux, F-78420 Carrieres s/Seine (FR)**

(43) Date de publication de la demande: **24.08.83**
**Bulletin 83/34**

(84) Etats contractants désignés: **AT BE CH DE GB IT LI LU NL SE**

(72) Inventeur: **Prioux, Alain, 142, Bld Maurice Berteaux, F-78420 Carrieres s/Seine (FR)**

(54) **Procédé de télécommande et de télécontrôle et appareils de mise en oeuvre du procédé.**

(57) Procédé de télécommande et de télécontrôle caractérisé en ce qu'il comprend les étapes suivantes:

— sélection et appel du poste téléphonique (10) sur la ligne (8), auquel est branché un appareil (9) de télécommande et de télécontrôle alimenté par le secteur;

— comptage du nombre de sonneries, prise de la ligne par l'appareil (9) et indication de l'opération par tonalité;

— émission (1,61) d'un signal intermittent codé suivant une séquence comportant une partie correspondant à un ordre de verrouillage et une partie désignant l'opération commandée et l'adresse du ou des périphériques à commander

— réception et décodage de la séquence par l'appareil (9) de télécommande;

— comparaison d'une partie de la séquence à un code de verrouillage et commande de la ou des opérations indiquées par le code de la séquence sur le ou les relais ou les périphériques à commander.

ACTORUM AG

- 1 -

La présente invention concerne un procédé de télécommande et de télécontrôle et les appareils permettant la mise en oeuvre du prodédé.

Il est connu des procédés de télécommande permettant, à partir de la sélection et de l'appel d'un poste téléphonique à partir d'un autre poste, de télécommander un appareil par l'émission d'une tonalité.

Toutefois ces appareils ne permettent pas de contrôler l'état de fonctionnement des dispositifs à télécommander.

D'autre part ils ne comportent pas des moyens de sécurité évitant la mise en route de l'appareil par un opérateur non autorisé, ou des moyens d'éliminer les faux appels ou de permettre l'utilisation de la ligne téléphonique pour son fonctionnement normal.

Un des principaux buts de l'invention est un procédé permettant d'assurer l'inviolabilité de la télécommande d'un ou de plusieurs appareils par un intrus, d'éliminer les faux appels ou de permettre l'utilisation normale du poste téléphonique sur lequel un appareil répondeur-décodeur est branché.

Un autre but de l'invention est la réalisation de l'appareil répondeur de télécommande permettant la mise en oeuvre de l'invention.

Selon l'invention, le procédé de télécommande et de télécontrôle est caractérisé en ce qu'il comprend les étapes suivantes :

-sélection et appel du poste téléphonique 10 sur la ligne 8 duquel est branché un appareil 9 de télécommande et de télécontrôle alimenté par le secteur.

-comptage du nombre de sonneries, prise de la ligne par l'appareil 9 et indication de l'opération par tonalité.

-émission 1,61 d'un signal intermittent codé suivant une séquence comportant une partie correspondant à un ordre de verrouillage et une partie désignant l'opération commandée et l'adresse du ou des péri-

- 2 -

phériques à commander.

-réception et décodage de la séquence par l'appareil 9 de télécommande.

-comparaison d'une partie de la séquence à un code de verrouillage et commande de la ou des opérations indiquées par le code de la séquence sur le ou les relais ou les périphériques à commander.

Selon l'invention l'appareil de télécommande et de télécontrôle permettant la mise en oeuvre du procédé, branché sur la ligne téléphonique et alimenté d'autre part par le secteur, est caractérisé en ce qu'il comprend :

-un premier circuit 311 de transmission et de mise en forme du signal de sonnerie branché en parallèle sur la ligne téléphonique.

-un circuit 350 d'alimentation, de commande d'un relai de prise de ligne R1 et de visualisation de l'état du relai.

-un deuxième circuit 320 de mise en forme et d'amplification des signaux transmis par la ligne téléphonique, branché en série par les contacts du relai R 1 sur la ligne téléphonique.

- un ensemble de circuits 331, 340 de lecture et de commande de changement d'état périphérique.

-un circuit 360 de réponse de l'appareil par une alimentation de fréquence de la ligne téléphonique.

-un circuit 308, 309 fournissant un code de verrouillage à comparer.

-un organe 300,304,306 de commande des différents circuits et/ou de traitement de l'information fournie par ces différents circuits.

-un circuit 370 d'alimentation en tension des différents circuits et organes de l'appareil.

D'autres caractéristiques et avantages de la présente revendication apparaitront plus clairement à la lumière de la description faite en référence aux dessins annexés dans lesquels :

-la figure 1 représente une vue schématique des appareils utilisés pour une commande à distance.

-la figure 2 représente le circuit électronique contenu dans le boitier du générateur sonore.

-les figures 3A et 3B représentent le circuit électronique de l'appareil de télécommande et télécontrôle

-la figure 3C représente une variante de réalisation du circuit de lecture et de commande de plusieurs relais bistables.

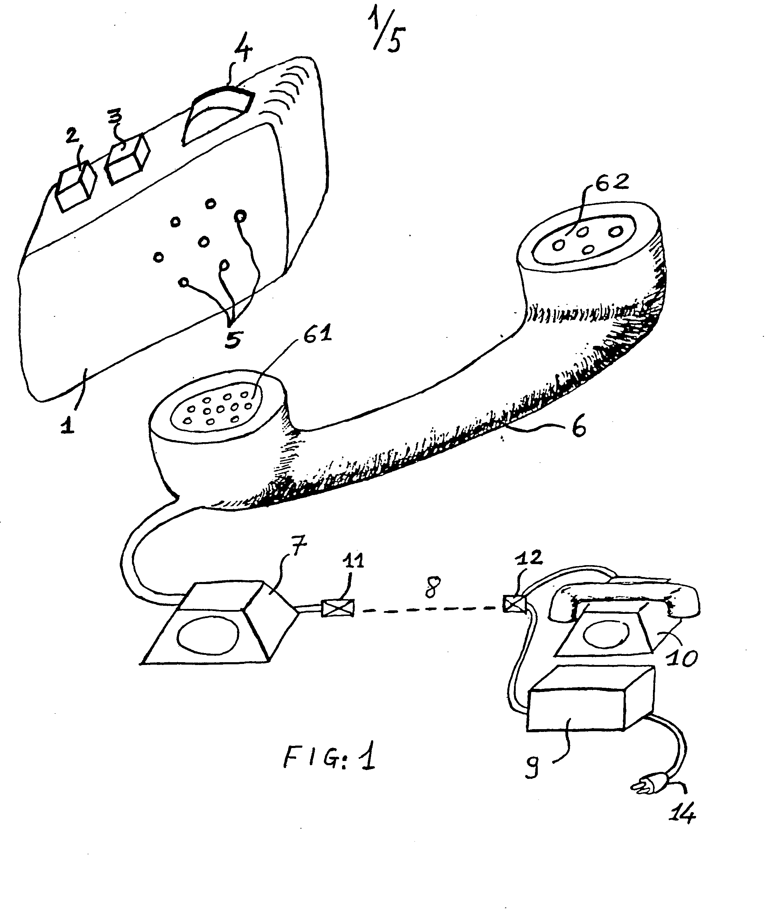

La figure 1 représente un boitier 1 portatif de la taille d'un paquet de cigarettes.Ce boitier comportant sur un de ses bords latéraux deux boutons poussoirs 2, 3 et un bouton molleté 4 comportant des inscriptions sous la forme,par exemple,de chiffres. Ce boitier comporte à l'intérieur un circuit générateur de signaux sonores intermittents alimenté par une pile de 9 V. Ce générateur de signaux sonores est utilisé pour envoyer un signal dans le microphone 61 d'un appareil téléphonique branché par une prise 11 au réseau téléphonique pour communiquer avec un appareil émetteur récepteur de télécommande 9 relié au réseau téléphonique 8 par une prise 12 sur laquelle est branché en parallèle un poste 10. L'appareil 9 alimenté par le secteur au moyen d'une prise 14 sert à commander des relais ou à indiquer leur état.

Le bouton 2 de l'appareil sert à commander une fonction de lecture de l'état des relais commandés par l'appareil 9 de télécommande et de télécontrôle à l'extrémité du réseau téléphonique. Dans ce cas l'appareil 9 envoie dans l'écouteur un signal sonore indicatif de l'état du relai.

Le bouton 3, lui, permet de commander une fonction d'écriture qui changera l'état des relais commandés par l'appareil de télécommande 9. Ensuite, en appuyant sur le bouton 2, on s'assurera que le relai a bien changé d'état.

Le bouton 4 permet de déterminer, dans le cas de plusieurs relais à télécommander ou à télécontrôler, le relai dont on va contrôler l'état ou changer l'état. Ce bouton 4 peut,dans le cas d'un appareil commandant un seul relai,être supprimé.

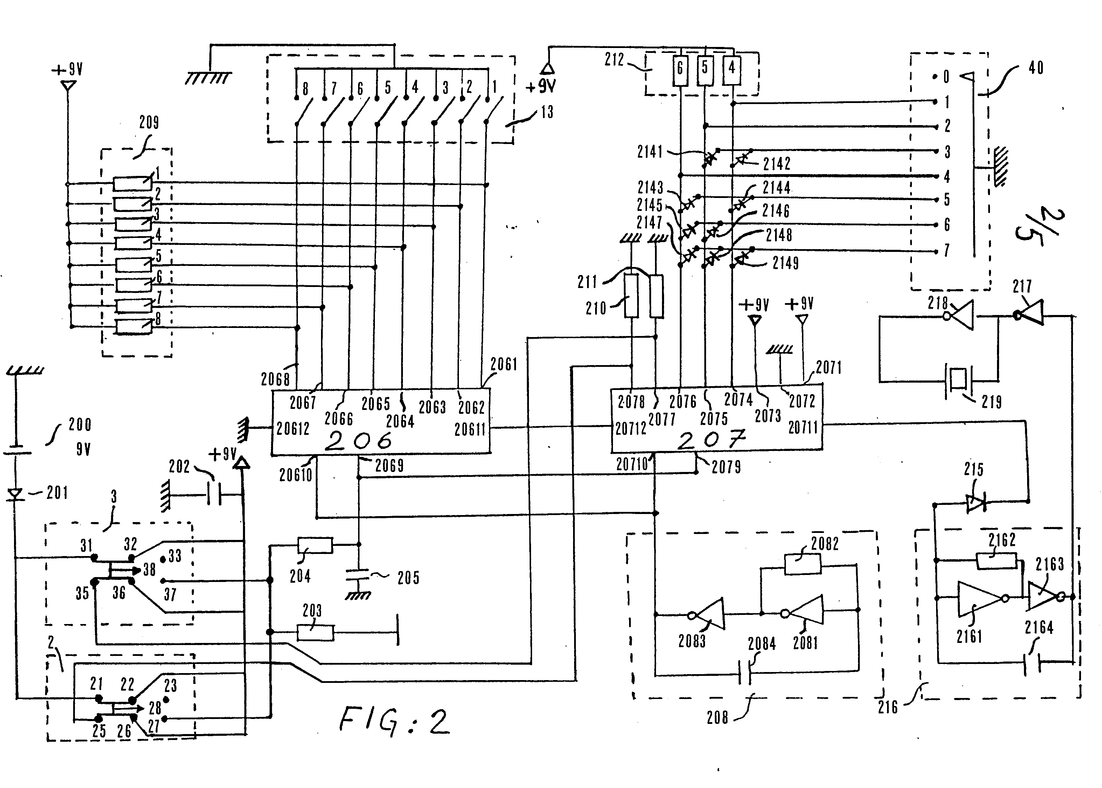

La figure 2 représente le circuit électronique du générateur de son intermittent contenu dans le boitier 1. Ce circuit comprend une source d'alimentation électrique constituée par une pile reliée,d'une part à la masse, d'autre part à une diode 201 dont la cathode est reliée aux bornes 31 et 21 des contacts des boutons poussoirs 2 et 3. Les bornes 22, 26 et 32,36 sont reliées d'une part à la masse par un condensateur, d'autre part à une source de tension de + 9 Volts. Les bornes 27 et 37 sont reliées à la masse par l'intermédiaire d'une résistance 203. En parallèle sur la résistance 203 est branché un circuit série, résistance 204, condensateur 205.

Le point commun à la résistance 204 et au condensateur 205 est branché à chacune des entrées 2069, 2079 chargement/décalage de deux registres 206,207. Les deux entrées d'horloge 20610 et 20611 sont reliées à un circuit oscillateur 208 constitué par exemple par une résistance 2082 montée en parallèle sur un amplificateur-inverseur 2081, l'ensemble étant branché à l'entrée d'un deuxième amplificateur-inverseur 2083 dont la sortie est branchée d'une part aux entrées 20610,20710 et d'autre part par l'intermédiaire d'un condensateur 2084 à l'entrée de l'amplificateur-inverseur 2081.

Les entrées 2061 à 2068 du premier registre à décalage peuvent être reliées soit à la masse par un ensemble 13 d'interrupteurs 131 à 138, soit à un potentiel de + 9 Volts par un ensemble 209 de résistances 2091 à 2098.

Ainsi, lorsque l'interrupteur 131 par exemple sera fermé, on changera sur l'entrée 2061 du registre une valeur représentant un bit 0, tandis que si on laisse l'interrupteur 132 par exemple ouvert on chargera sur l'entrée 2062 une valeur représentant un bit 1. En modifiant la position des interrupteurs on pourra modifier les valeurs entrées dans le premier registre 206 qui constitue un registre de verrouillage. La sortie 20611 du registre 206 est branchée à une entrée 20712 du deuxième registre 207. Le registre 206 est également pourvu d'une entrée 20612 reliée à la masse. L'entrée 2072 du registre est branchée à la masse tandis que les entrées 2071 et 2073 sont branchées à un potentiel de + 9 Volts. L'entrée 2078 est reliée d'une part à la masse par l'intermédiaire d'une résistance 210 et d'autre part à la borne 25 du bouton poussoir 2.

L'entrée 2077 du registre est reliée d'une part à la masse par l'intermédiaire d'une résistance 211 et d'autre part à la borne 35 du bouton poussoir 3. Les entrées 2074, 2075, 2076 sont reliées chacune d'une part à un potentiel de + 9 Volts par un ensemble 212 de résistance2124, 2125, 2126 et d'autre part, par l'intermédiaire d'un ensemble 214 de diode aux sept bornes d'une roue codeuse 40 à 8 positions, associée au bouton molleté 4 et dont le plot central est relié à la masse.

L'ensemble 214 de diode est branché d'une part par l'anode aux entrées 2074, à 2076 et d'autre part par la cathode aux bornes 1 à 7 de la roue codeuse 40 de façon à coder en binaire les 8 positions de la roue.

Ainsi la borne 403 est reliée à la cathode des diodes 2141 et 2142 dont les anodes sont reliées respectivement aux entrées 2075 et 2074 du registre.

La borne 405 est reliée à la cathode des diodes 2143 et 2144 dont les anodes sont reliées respectivement aux entrées 2076 et 2074 du registre.

La borne406 est reliée à la cathode des diodes 2145 et 2146 dont les anodes sont reliées respectivement aux entrées 2076 et 2075 du registre.

La borne 407 est reliée à la cathode des diodes 2147, 2148, 2149 dont les anodes sont reliées respectivement aux entrées 2076,2075, 2074 du registre.

Les bornes 401, 402, 404 sont reliées respectivement aux entrées 2074, 2075, 2076 du registre.

La sortie 20711 du registre 207 est branchée à la cathode d'une diode 215 dont l'anode est reliée à l'entrée d'un circuit oscillateur 216 constitué par le premier amplificateur-inverseur 2161. Ce circuit oscillateur 216 est du même type que le circuit 208 et comprend une résistance 2162, un deuxième amplificateur-inverseur 2163 et un condensateur 2164.

La sortie du deuxième inverseur 2163 est branchée à un amplificateur-inverseur 217 dont la sortie est connectée d'une part à l'entrée d'un inverseur 218, et d'autre part à une première borne d'un haut-parleur piézo-électrique 219 dont l'autre borne est reliée à la sortie de l'inverseur 218.

Le circuit de la figure 2 fonctionne de la manière suivante :

Lorsque l'on enfonce un des deux boutons 2 ou 3 le contact mobile 28 ou 38 va relier les bornes 26 et 27 ou 36 et 37 entre elles et permettre à la tension de 9 volts d'alimenter les entrées 2069 et 2079 par l'intermédiaire du circuit de temporisation , constitué des résistances 203, 204 et du condensateur 205. Les entrées 2069 et 2079 étant alimentées par une tension représentant le niveau 1, les deux registres 206 et 207 vont se charger en fonction des codes choisis. En même temps et pendant tout le temps où un des boutons sera maintenu enfoncé il apparaît en 20711 le niveau 1 et l'oscillateur oscille à une fréquence fixe et par l'intermédiaire des amplificateurs 217 et 218 alimente le haut-parleur piezo-électrique 219 qui va émettre un son continu.

Lorsque l'on relâche un des boutons poussoirs 2 ou 3, les entrées 2069 et 2079 sont alimentées par une tension représentant le niveau zéro qui commande donc le décalage des informations binaires qui ont été chargées aux entrées 2061 à 2068 et 2071 à 2078. Le décalage des informations binaires chargées dans le registre est effectué au rythme de l'horloge constituée par l'oscillateur 208. Les informations binaires qui sont décalées au rythme de l'horloge 208 modulent la fréquence de l'oscillateur 216 et les signaux sonores émis par le haut-parleur piézo-électrique qui va ainsi émettre un signal qui dépendra du codage choisi.

Les interrupteurs 131 à 138 permettent de coder une information de verrouillage, tandis que la roue codeuse 213 servira à désigner le numéro du relai qui sera lu ou commandé dans le cas d'une opération d'écriture.

Supposons qu'on veuille faire une opération de lecture du relai n°5 et que l'on a choisi de fermer dans l'ensemble 13 les interrupteurs 132 et 137, on aura donc après avoir appuyé sur le bouton 2 les informations binaires suivantes :

lecture    N° relai

    1 0 1 1 1 1 0 1         0 1    0 1 0 . 1 0 1

      registre 206              registre 207

Dans le cas d'opération d'écriture du même relai et pour le même verrouillage on aura :

écriture    N° relai

    1.0 1 1 1 1 0 1         1 0    0 1 0    1 0 1

      registre 206              registre 207

Au fur et à mesure du décalage les registres 206 d'abord puis 207 se remplissent de zéros. Au bout de 16 tops de l'horloge 208 les registres 206 et 207 seront remplis de zéros et l'oscillateur 216 s'arrête et par conséquent le haut-parleur 219.

Il va de soi que diverses modifications des circuits sont possibles et que toute modification à la portée de l'homme de l'art fait partie également du principe de l'invention.

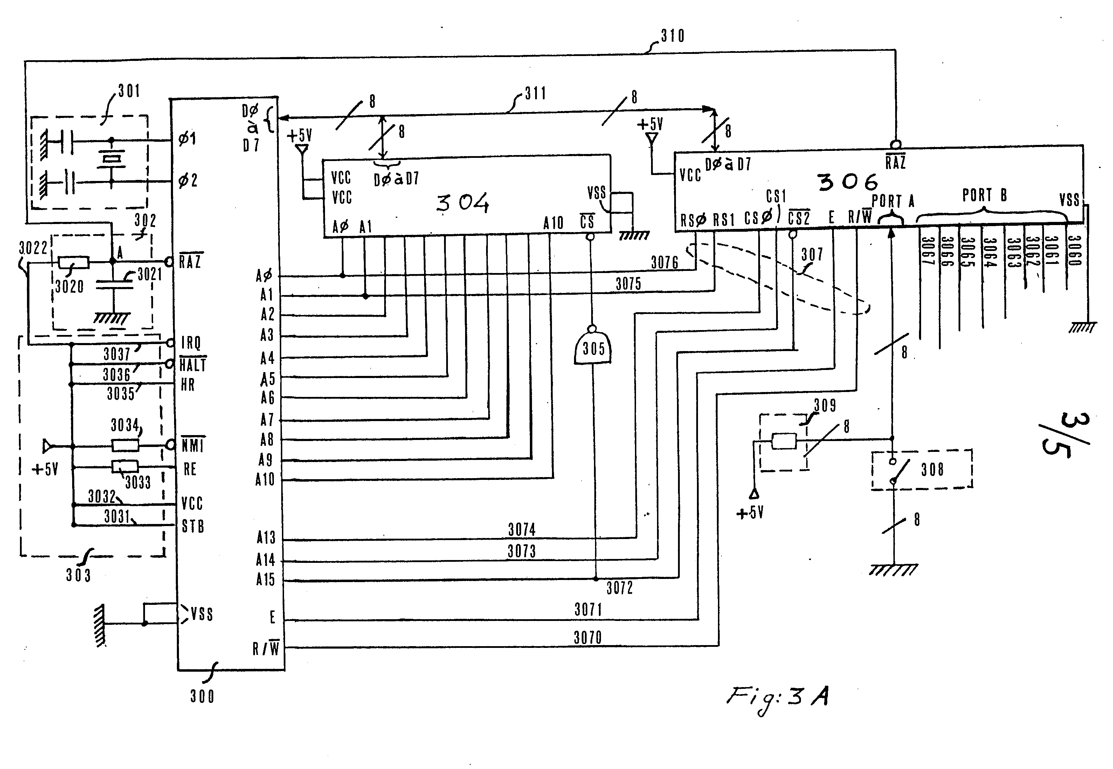

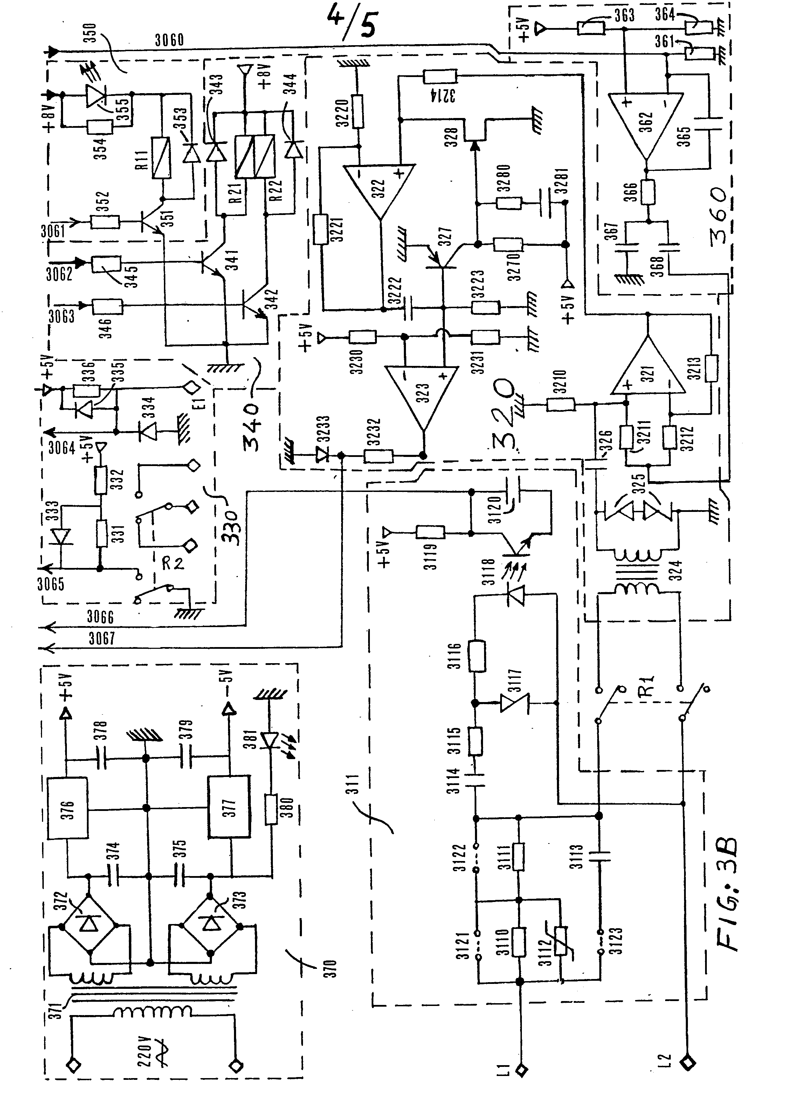

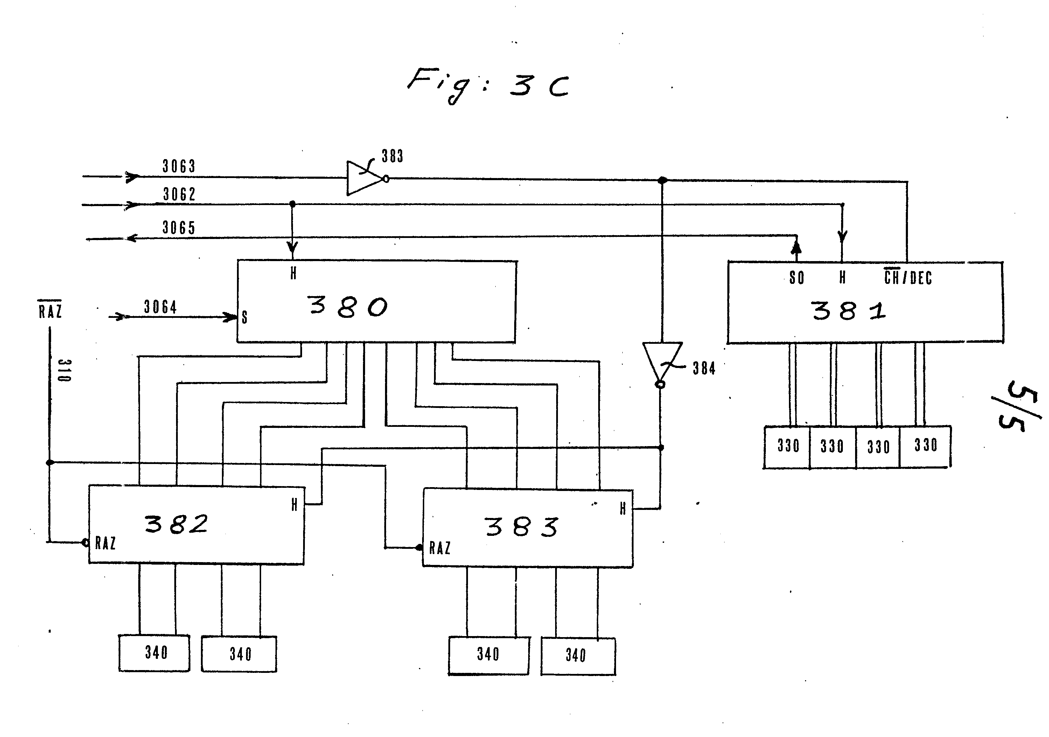

La figure 3 représente le circuit électronique associé à l'appareil répondeur de télécommande et de télécontrôle. La figure 3A représente le cablage du microprocesseur 300 MOTOROLA du type 6802 associé avec une mémoire morte 304 et une interface parallèle 306 de liaison avec les périphériques. Le microprocesseur 300 est alimenté par une tension de + 5 V transmise par un circuit 303 d'alimentation et de commande dans lequel la source de tension est branchée, par la liaison 3031 à l'entrée S T B du microprocesseur, par la liaison 3032 à l'entrée V C C, par une résistance 3033 à l'entrée R E, par une résistance 3034 et un inverseur à l'entrée $\overline{N M I}$, par la liaison 3035 à l'entrée H R, par la liaison 3036 et un inverseur à l'entrée $\overline{H A L T}$, par la liaison 3037 et un inverseur à l'entrée $\overline{I R Q}$. La tension d'alimentation est également branchée par une liaison 3022 à un circuit 302 de redémarrage à la mise sous tension comportant de façon connue une résistance 3020 reliée d'une part à la liaison 3022 et d'autre part par un inverseur à l'entrée $\overline{R A Z}$. Un condensateur 3021 est branché entre le point A et la masse. Le point A est également relié par une liaison et un inverseur à l'entrée $\overline{R A Z}$ du circuit interface 306.

Une horloge 301 est branchée de façon connue aux entrées $\emptyset$ 1 et $\emptyset$ 2 du microprocesseur.

Les bornes D 0 à D 7 du microprocesseur 300 sont branchées au bus donné 311 à 8 bits sur lequel seront également branchées les sorties D 0 à D 7 de la mémoire morte 304 et l'interface 306. Les sorties adresse A $\emptyset$ à A 10 du microprocesseur 300 sont branchées aux sorties adresse A $\emptyset$ à A 10 de la mémoire morte 304 par un bus adresse à 11 bits. La sortie adresse A 15 du microprocesseur 300 sera branchée par l'intermédiaire d'un inverseur 305 à l'entrée $\overline{C S}$ de sélection de la mémoire 304. Les entrées V C C de la mémoire 304 sont reliées à un potentiel de + 5 Volts tandis que les entrées V S S sont reliées à la masse.

L'interface 306 est commandée par un bus de commande 307 dans lequel la liaison 3070 relie la borne de commande d'écriture/lecture R/$\overline{W}$ de l'interface 306, la liaison 3071 relie la borne E de l'interface 306; la liaison 3072 relie la sortie adresse A 15 du microprocesseur 300 à l'entrée de commande $\overline{C\ S\ 2}$ de l'interface 306; la liaison 3073 relie la sortie adresse A 14 du microprocesseur à la borne CS1 de l'interface 306; la liaison 3074 relie la sortie adresse A 13 à l'entrée de commande C S $\emptyset$ de l'interface 306; les liaisons 3075, 3076 relient respectivement les sorties adresse A 1 et A $\emptyset$ aux entrées de commande R S 1 et R S $\emptyset$ de l'interface 306.

Le potentiel d'alimentation de + 5 Volts est branché à l'entrée V C C de l'interface 306 tandis que la masse est branchée à l'entrée V S S.

Les entrées-sorties de l'interface 306 sont constituées par le port A de 8 bits et le port B de 8 bits. Le port A est relié par l'intermédiaire du bus de 8 bits d'une part à la masse par l'intermédiaire d'un ensemble 308 de huit interrupteurs et d'autre part à un potentiel de + 5 Volts par l'intermédiaire d'un ensemble 309 de huit résistances. Les huit sorties 3060 à 3067 du port B sont reliées au circuit représenté sur la figure 3 B.

L'entrée 3066 est reliée à un circuit de transmission du signal de sonnerie 311 branché sur les bornes L 1 et L 2 de la ligne téléphonique. Ce circuit comprend un dispositif de mise en forme et d'écrêtage constitué par les résistances 3110 , 3111, 3115, 3116, l'écrêteur 3112, les condensateurs de découplage 3113 et 3114 et la diode zener 3117. Ce dispositif alimente la diode d'un opto-coupleur 3118 dont le transistor est alimenté au collecteur à travers une résistance 3119 par une tension de + 5 Volts. L'émetteur est relié à la masse d'une part et d'autre part à travers un condensateur 3120 au collecteur. La sortie 3066 sera branchée au point commun , au collecteur, à la résistance et au condensateur.

L'entrée 3067 est reliée à un circuit de mise en forme 320 des signaux d'entrée constitué par un transformateur 324 abaisseur de tension relié d'une part à la ligne téléphonique en aval du contact de prise de ligne R 1 et d'autre part par l'intermédiaire des diodes zener 325 d'écrêtage et du condensateur de filtrage 326 à l'entrée d'un amplificateur opérationnel 321. L'entrée positive de l'amplificateur est reliée d'une part à la masse par une résistance 3211 et d'autre part à l'entrée négative par deux résistances en série 3211, 3212. L'entrée négative de l'amplificateur est également reliée par une résistance 3213 à la sortie de l'amplificateur qui est branchée par un résistance 3214 à l'entrée positive d'un deuxième amplificateur opérationnel 322. L'entrée négative de l'amplificateur 322 est reliée d'une part à la masse par la résistance 3220 et d'autre part à la sortie par la résistance 3221. La sortie de l'amplificateur 322 est également reliée à la masse par une résistance 3222 et un condensateur 3223. Le point commun à la résistance et au condensateur est relié d'une part à l'entrée positive d'un amplificateur opérationnel 323 et d'autre part à la base d'un transistor P N P 327 dont l'émetteur est à la masse et le collecteur relié à un potentiel de + 5 Volts par une résistance 3270. Le point commun à la résistance 3270 et au collecteur du transistor 327 est relié d'une part à la base d'un transistor unijonction 328 et d'autre part par un résistance 3280 en série avec un condensateur 3281 à un potentiel de + 5 Volts. L'une des bases de l'unijonction est reliée à l'entrée positive de l'amplificateur tandis que l'autre base est reliée à la masse . L'entrée négative de l'amplificateur 323 est reliée au point commun à deux résistances 3230 et 3231 dont la première est reliée au potentiel de + 5 Volts et la seconde à la masse . La sortie de l'amplificateur est reliée à la masse par une résistance 3232 en série avec une diode 3233 dont l'anode est branchée à la masse . Le point commun à la résistance et à la diode est branché à l'entrée 3067 de l'interface 306.

Les entrées 3065 et 3064 sont reliées à un circuit 330 de lecture de l'état d'un relai R 2 et d'une autre entrée E 1. L'entrée 3065 est reliée, d'une part à une borne fixe du contact du reläi R 2 dont la borne solidaire du contact mobile est reliée à la masse, d'autre part par deux résistances 331, 332 au potentiel de + 5 Volts.

Le point commun aux deux résistances 331, 332 est relié à l'anode d'une diode 333 dont la cathode est reliée à l'entrée 3065. Lorsque le contact mobile est dans la position de la figure 3B l'entrée 3065 est au niveau 1 tandis que si la borne fixe est reliée à la masse par le contact mobile l'entrée 3065 est au niveau zéro.

L'autre entrée 3064 est reliée à la cathode d'une diode 334 reliée par son anode à la masse. La cathode de cette diode est reliée d'une part à une entrée de test E 1 et d'autre part par une diode 335 en parallèle sur une résistance 336 au potentiel + 5 Volt.

Les sorties 3063 et 3062 sont reliées à un circuit 340 de commande des bobines d'un relai bistable R 2. Les bobines R 21 et R 22 du relai sont branchées d'une part à un potentiel de + 8 Volts et d'autre part chacune au collecteur d'un transistor N P N (respectivement 341, 342). Les émetteurs de chaque transistor sont reliés à la masse tandis que leur base est reliée respectivement aux entrées 3062, 3063 par les résistances 345, 346. En parallèle sur les bobines R 21, R22 sont montées respectivement les diodes 343, 344 dont les cathodes sont branchées au potentiel de + 8 Volts.

La sortie 3061 est branchée à un circuit de prise de ligne 350 constitué par un transistor N P N 351 dont l'émetteur est relié à la masse et dont la base est reliée par une résistance 352 à la sortie 3061. Le collecteur du transistor 351 est relié au potentiel + 8 Volts par une bobine R 11 du relai de prise de ligne en série avec une résistance 354.

En parallèle sur la bobine est montée une diode 353 dont l'anode est reliée au collecteur du transistor 351, de même en parallèle sur la résistance 354 est branchée une diode électro-luminescente 355 dont l'anode est reliée au potentiel de + 8 Volts.

La sortie 3060 est reliée, par un circuit 360 de mise en forme des signaux, à la ligne téléphonique.

L'entrée 3060 est reliée d'une part à la masse par une résistance 361, d'autre part à l'entrée négative d'un amplificateur opérationnel 362 dont l'entrée positive est reliée par une résistance 363 au potentiel + 5 Volts et par une résistance 364 à la masse. La sortie de l'amplificateur 362 est reliée d'une part à l'entrée négative par un condensateur 365, et d'autre part à la masse par une résistance 366 en série avec le condensateur 367. Le point commun à la résistance 366 et au condensateur 367 est relié par un condensateur 368 de découplage au point commun aux deux résistances 3211, 3212 du circuit d'entrée 320.

Enfin les tensions de ± 5 Volt sont fournies par un circuit d'alimentation stabilisé 370 relié au secteur par la prise 14. Ce circuit comprend de façon connue en soi un transformateur double 371 abaisseur de tension, cette tension est ensuite redressée dans chaque branche du secondaire par un pont de diode 372, 373, puis filtrée par les condensateurs 374, 375 pour alimenter les circuits intégrés 376,377 qui fournissent au travers des condensateurs de découplage 378, 379 les tensions continues de ± 5 Volts.

Une diode de signalisation de mise sous tension 381 est reliée par son anode à la masse et par sa cathode à une résistance 380 qui est branchée à l'entrée du circuit intégré 377.

En fonctionnement lorsque la prise 14 est branchée, le microprocesseur 300 exécute le programme contenu dans la mémoire morte 304. Ce programme consiste à venir lire périodiquement l'état de l'entrée 3066 des entrées-sorties de l'interface 306. Lorsque l'utilisateur compose le numero du poste téléphonique sur la ligne duquel est branché l'appareil 9 (répondeur-décodeur), le central envoie une tension de sonnerie (72 V, 25 Hz) qui franchit sans difficulté le condensateur de découplage 3114 et après écrêtage est transmise par l'opto coupleur à la ligne d'entrée 3066 de l'entrée B de l'interface . Lorsque le microprocesseur constate des changements de niveau dans l'entrée 3066 il se met à compter le nombre de sonneries et au bout d'un certain nombre de sonneries pour éviter les faux numéros, provoque une sortie au niveau 1 sur la ligne 3061 qui va permettre en débloquant le transistor 351 d'alimenter la bobine R 11 du relai de prise de ligne dont les contacts mobiles vont brancher la ligne téléphonique à l'entrée du transformateur 324. En même temps, la diode électro-luminescente 355 signale à un observateur proche de l'appareil 9 que la ligne a été prise, tandis qu' une fréquence fixe envoyée par le microprocesseur sur la ligne 3060 permet, par le circuit de sortie 360, la ligne téléphonique et l'écouteur 62, de signaler à l'opérateur par une tonalité, que la ligne a été prise par l'appareil de télécommande 9.

A ce moment-là, l'opérateur approche du microphone 61 l'émetteur de signaux sonores 1 et envoie un signal sonore qui est converti en un signal électrique par l'appareil téléphonique. Le signal électrique transmis par la ligne est capté par le circuit d'entrée 320 qui, après mise en forme du signal, transmet ce signal à l'entrée 3067 de l'entrée B de l'interface. Le microprocesseur, par son programme décode la série d'impulsions reçue sur l'entrée 3067 et stocke dans ses registres l'information sous la forme d'une série de 16 bits, dont certains représentent le numéro du relai à lire ou commander, d'autres opérations à effectuer et les derniers le code de verrouillage, évitant que des opérateurs non habilités puissent commander l'appareil 9. A ce moment le microprocesseur donne un ordre d'entrée à l'interface pour les entrées A et compare le code de verrouillage de l'émetteur 1 avec le code représenté par les états des 8 entrées A commandées par la position des 8 interrupteurs 308 de l'appareil 9. Sil y a coïncidence le programme continue, dans le cas contraire le microprocesseur libère la ligne téléphonique. Dans le cas de coïncidence des codes de verrouillage, le microprocesseur effectue, soit une opération de lecture sur l'entrée 3065 pour un relai ou sur l'entrée 3064 pour un autre périphérique, soit une opération d'écriture en positionnant à l'état haut la sortie 3062 ou 3063 suivant que le relai R 2 doit être mis à l'état haut ou bas. Suite à une opération de lecture le microprocesseur envoie sur la sortie 3060 une fréquence qui sera transformée par le circuit de sortie 360,la ligne téléphonique et l'écouteur 62, en une tonalité haute ou basse qui sera significative de l'état lu. Lorsque l'on a effectué une opération d'écritur, l'opérateur commande une opération de lecture pour s'assurer que l'état du ou des relais commandés a bien été corrigé.

Enfin le microprocesseur, après avoir été un certain temps sans recevoir d'ordre de lecture ou d'écriture, rendra la ligne téléphonique.

La figure 3 C représente une variante du circuit de lecture et de commande relié à l'interface 306 dans lequel on pourra commander ou lire plusieurs relais.

Dans ce schéma la sortie 3064 est branchée à l'entrée série d'un registre 380 à huit sorties parallèles dont l'entrée d'horloge H est reliée à la sortie 3062. Les sorties parallèles du registre 380 sont reliées aux huit entrées parallèles de deux registres 382, 383 à 4 entrées parallèles et sorties parallèles.

Les entrées R A Z remises à zéro des registres 382,383 sont reliées à la ligne 310 de remise à zéro au démarrage.

Les entrées horloge H des deux registres 382,383 sont reliées par deux inverseurs 384, 385 à la ligne de sortie 3063 qui validera la transmission des commandes des relais.

Les sorties parallèles du registre sont branchées deux par deux aux entrées de deux circuits 340 de commande de deux bobines de relai bistable. Ainsi, en transmettant sur la ligne 3064 un signal de 8 bits en série, on pourra commander l'écriture de 4 relais. La commande des relais sera évidemment fonction de la position de la roue codeuse.

En lecture, l'entrée 3065 est reliée à la sortie série d'un registre 381 à entrées parallèles dont l'entrée d'horloge est fournie par la sortie 3062 tandis que la sortie 3063 est branchée par un inverseur 385 à l'entrée $\overline{C\,H}$/Dec commandant le décalage lorsqu'un niveau haut est présent et le chargement lorsqu'un niveau bas est présent. Les 8 entrées du registre 385 sont branchées à 4 circuits 330 de lecture des états de 4 relais et de 4 entrées supplémentaires.

En fonctionnement ces circuits servent à sérialiser des signaux entrant en parallèle ou à sortir en parallèle des signaux sérialisés et à valider le fonctionnement de l'un ou l'autre des circuits.

Enfin il est bien évident que toute modification à la portée de l'homme de l'art fait également partie de l'invention , notamment en ce qui concerne le type de microprocesseur et les tensions d'alimentation. L'alimentation pourrait tout aussi bien se faire par batterie, capteur solaire ou autre système générant une tension propre à alimenter des composants électroniques.

# REVENDICATIONS

1°) Procédé de télécommande et de télécontrôle caractérisé en ce qu'il comprend les étapes suivantes :

- sélection et appel du poste téléphonique 10 sur la ligne 8 duquel est branché un appareil 9 de télécommande et de télécontrôle alimenté par le secteur.

- comptage du nombre de sonneries, prise de la ligne par l'appareil (9) et indication de l'opération par tonalité.

- émission 1,61 d'un signal intermittent codé suivant une séquence comportant une partie correspondant à un ordre de verrouillage et une partie désignant l'opération commandée et l'adresse du ou des périphériques à commander.

- réception et décodage de la séquence par l'appareil 9 de télécommande.

- comparaison d'une partie de la séquence à un code de verrouillage et commande de la ou des opérations indiquées par le code de la séquence sur le ou les relais ou les périphériques à commander.

2°) Procédé selon la revendication 1 caractérisé en ce que l'émission du signal intermittent codé est produite par un générateur sonore intermittent coopérant par liaison phonique avec le microphone d'un appareil téléphonique.

3°) Procédé selon la revendication 1 caractérisé en ce que les opérations peuvent être de lecture ou d'écriture et que l'opération de lecture est suivie de l'émission d'une tonalité indiquant l'état du périphérique lu.

4°) Procédé selon la revendication 3 caractérisé en ce que une opération d'écriture est suivie de l'émission d'une autre séquence sonore à l'initiative de l'opérateur pour commander une lecture de contrôle.

5°) Appareil de télécommande et de télécontrôle permettant la mise en oeuvre du procédé selon l'une des revendications 1 à 4, branché sur la ligne téléphonique et alimenté d'autre part par le secteur, caractérisé en ce qu'il comprend :

- un premier circuit 311 de transmission et de mise en forme du signal de sonnerie branché en parallèle sur la ligne téléphonique

- un circuit 350 d'alimentation, de commande d'un relai de prise de ligne R 1 et de visualisation de l'état du relai

- un deuxième circuit 320 de mise en forme et d'amplification des signaux transmis par la ligne téléphonique, branché en série par les contacts du relai R 1 sur la ligne téléphonique

- un ensemble de circuits (331, 340) de lecture et de commande de changement d'état périphérique

- un circuit 360 de réponse de l'appareil par une alimentation en fréquence de la ligne téléphonique

- un circuit (308, 309) fournissant un code de verrouillage à comparer

- un organe (300, 304, 306) de commande des différents circuits et/ou de traitement de l'information fournie par ces différents circuits

- un circuit (370) d'alimentation en tension des différents circuits et organes de l'appareil.

6°) Appareil de télécommande et de télécontrôle selon la revendication 5 caractérisé en ce que l'organe de commande et/ou de traitement est constitué par un microprocesseur 300 programmé par une mémoire morte 304 et un circuit d'interface 306 à deux entrée-sortie et dont la

-19-

première entrée-sortie est reliée en entrée au circuit 308, 309 de fourniture du code de verrouillage alors que la seconde entrée-sortie est reliée au circuit de transmission de sonnerie 311, au circuit de prise de ligne 350, au circuit de transmission 320 des signaux de la ligne téléphonique, au circuit de lecture et de commande des périphériques et au circuit 360 d'alimentation de la ligne téléphonique en réponse.

7°) Appareil de télécommande et de télécontrôle selon la revendication 6 caractérisé en ce que les périphériques sont plusieurs relais bistables et que les circuits de lecture et de commande des relais bistables sont reliés en lecture par des moyens 381 de transformer les informations parallèles en informations série et en commande par des seconds moyens (380, 382, 383) de transformer les sorties séries en sorties parallèles et des moyens de valider les premiers et seconds moyens.

8°) Appareil de télécommande et de télécontrôle selon la revendication 5 comprenant un générateur sonore intermittent alimenté par pile, comportant des boutons poussoirs 2, 3 de commande de fonction, une roue codeuse 4 de désignation d'une adresse et un oscillateur 216 alimentant un haut-parleur par des inverseurs 218, 217 suivant une fréquence modulée par des moyens 215, caractérisé en ce que les moyens de moduler la fréquence comportent des moyens (206, 207) de sérialiser des signaux binaires parallèles représentatifs d'un code de verrouillage, du bouton poussoir actionné et de la position de la roue codeuse 4, des moyens 2, 3, 203, 204, 205 de valider la sérialisation et des moyens 208 de décaler les signaux sérialisés pour moduler la fréquence.

0086688

1/5

FIG: 1

FIG.2

2/5

0086688

Fig. 3A

0086688

FIG. 3B

Fig: 3 C

5/5

0086688

Office européen
des brevets

**RAPPORT DE RECHERCHE EUROPEENNE**

Numéro de la demande

EP 83 40 0181

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 074 678 (GOLDEN ET GOTTESMAN)<br>* En entier * | 1-5,8 | H 04 M 11/00 |
| | --- | | |
| A | FR-A-1 565 652 (HALNAUT)<br>* En entier * | 1-5 | |
| | ----- | | |

DOMAINES TECHNIQUES
RECHERCHES (Int. Cl. ³)

H 04 M 11/00

Le present rapport de recherche a été établi pour toutes les revendications

| Lieu de la recherche | Date d'achèvement de la recherche | Examinateur |
|---|---|---|
| LA HAYE | 04-05-1983 | WANZEELE R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO Form 1503 03 82